Europäisches Patentamt

European Patent Office

Office européen des brevets

(11) Publication number:

0 249 429
A2

## (12) EUROPEAN PATENT APPLICATION

(21) Application number: 87305048.8

(22) Date of filing: 08.06.87

(51) Int. Cl.⁴: **G03C 7/00** , G03C 1/00 ,
//G03G15/01,G03B33/00

(30) Priority: 10.06.86 JP 135438/86

(43) Date of publication of application:
16.12.87 Bulletin 87/51

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Ishiyama, Keiichi**
**Seiko Instruments Inc 31-1, Kameido**
**6-chome**
**Koto-ku Tokyo(JP)**
Inventor: **Ueda, Makoto**
**Seiko Instruments Inc 31-1, Kameido**
**6-chome**
**Koto-ku Tokyo(JP)**
Inventor: **Misono, Shigemi**
**Seiko Instruments Inc 31-1, Kameido**
**6-chome**
**Koto-ku Tokyo(JP)**
Inventor: **Torii, Tomoyuki**
**Seiko Instruments Inc 31-1, Kameido**
**6-chome**
**Koto-ku Tokyo(JP)**
Inventor: **Shikino, Kazuto**
**Seiko Instruments Inc 31-1, Kameido**
**6-chome**
**Koto-ku Tokyo(JP)**
Inventor: **Aoyagi, Toshiharu**
**Seiko Instruments Inc 31-1, Kameido**
**6-chome**
**Koto-ku Tokyo(JP)**

(74) Representative: **Miller, Joseph et al**
**J. MILLER & CO. Lincoln House 296-302 High**
**Holborn**
**London WC1V 7JH(GB)**

(54) Method and apparatus for forming a multi-colour image.

(57) A method of forming a multi-colour image comprising forming a layer of rupturable capsules (A1, A2, A3), the said capsules containing material ($a_1$, $a_2$, $a_3$, $b_1$, $b_2$, $b_3$) at least part ($a_1$, $a_2$, $a_3$) of which is adapted to form an image and at least part ($b_1$, $b_2$, $b_3$) of which is such that the ability to form the said image is altered upon exposure to light; exposing said capsules (A1, A2, A3) to a predetermined light pattern; and rupturing said capsules (A1, A2, A3) so as to produce an image characterised in that the capsules (A1,A2,A3) contain materials ($a_1$, $a_2$, $a_3$, $b_1$, $b_2$, $b_3$) of different colours (C,M,Y) whose abilities to form images are respectively altered on exposure to light of different wavelengths($\lambda_1$, $\lambda_2$, $\lambda_3$), the exposure

of the capsules to the predetermined light pattern comprising exposing them to light of the said wavelengths ($\lambda_1$, $\lambda_2$, $\lambda_3$).

## FIG.1

## "METHOD AND APPARATUS FOR FORMING A MULTI-COLOUR IMAGE"

This invention relates to a method and apparatus for forming a multi-colour image and, although it is not so restricted, it relates more particularly to a colour printing system wherein regions of a layer of rupturable capsules are ruptured to release dye that prints a colour image on an image-receiving sheet.

For the purpose of hard-copying colour pictures projected on a display screen of a CAD/CAM system, a thermo-transferring printer or an inkjet printer is used. However, there are some problems in that it takes a long time to print out, and only one colour can be presented per dot so that the area of one picture element is large. Consequently, the quality of the printed pictures is poor.

In order to solve the above problems, another approach, shown in US-A-4,399,209, has been proposed. In that case, the colour imaging system has images formed by image-wise exposure of a layer of pressure rupturable microcapsules each of which encapsulates a dye and a photosensitive composition.

According to the present invention, there is provided a method of forming a multi-colour image comprising forming a layer of rupturable capsules, the said capsules containing material at least part of which is adapted to form an image and at least part of which is such that the ability to form the said image is altered upon exposure to light; exposing said capsules to a predetermined light pattern; and rupturing said capsules so as to produce an image characterised in that the capsules contain materials of different colours whose abilities to form images are respectively altered on exposure to light of different wavelengths, the exposure of the capsules to the predetermined light pattern comprising exposing them to light of the said wavelengths.

The said material may be such that the whole of it is both normally adapted to form an image and is also such that the ability to form an image is altered upon exposure to light.

Preferably, however, each said capsule contains a dye and a composition for immobilizing the dye.

The capsules preferably respectively contain dyes of three primary colours, each capsule containing a dye of one primary colour only.

Preferably, a plurality of monochrome pictures are formed which correspond respectively to monochrome components of the required multi-colour image, and light of the respective one of said wavelengths is directed onto each monochrome picture so as to be reflected thereby onto the capsules.

Preferably, a light sensitive plate, whose electrical resistance changes when subjected to light, is electrically charged, is scanned by a light beam to produce a pattern of areas of low and high resistance, and has toner applied thereto so as to produce the said monochrome pictures.

Preferably, the layer of rupturable capsules are coated onto an imaging member, the rupture of the capsules causing the image to be transferred to an image-receiving member.

The image may be transferred by positioning the imaging member and the image-receiving member adjacent to each other, and effecting the said rupture by subjecting the capsules to pressure.

The image-receiving member is preferably coated with a developing material which generates colours in response to the said material.

If desired, the imaging member may comprise an endless belt. The endless belt may extend through a vessel containing a liquid medium in which the said capsules are dispersed.

The imaging member and the image-receiving member may contact diametrically opposite points on a copying roller which transfers material from the ruptured capsules on the imaging member to the image-receiving member.

The invention also comprises apparatus for forming a multi-colour image comprising exposure means for exposing to a predetermined light pattern a layer of rupturable capsules which contain material at least part of which is adapted to form an image and at least part of which is such that the ability to form the said image is altered by exposure to light, and means for rupturing said capsules so as to produce an image characterised in that the exposure means comprise means for exposing the capsules to light of different wavelengths, such that the image-producing properties of capsules containing materials of different colours are respectively altered thereby.

There may be monochrome picture producing means for producing a plurality of monochrome pictures which correspond respectively to monochrome components of the required multi-colour image, the exposure means comprising means for directing light of the respective one of said wavelengths onto each monochrome picture so as to be reflected thereby onto the capsules.

Preferably, the monochrome picture producing means comprises a light-sensitive plate whose electrical resistance changes when subjected to light; means for electrically charging the light-sensitive plate; scanning means for scanning a light beam over the light-sensitive plate to form thereon a pattern of areas of low and high resistance; and means for applying toner to the so charged and scanned light-sensitive plate.

The arrangement may thus be such that the light-sensitive plate is first charged by the means for electrically charging it and is thereafter scanned by the scanning means, such scanning having the effect of leaving the light-sensitive plate more highly charged in some areas than others so that the toner is attracted to the more highly charged areas. The light-sensitive plate may be moved to a first position in which a first monochrome picture is built up and is then moved to a second or further position where another monochrome picture is built up.

Alternatively, a first line of each of the said pictures may be built up while the light-sensitive plate is moved in one direction of reciprocation, a second line of each of the pictures is built up by moving the light-sensitive plate in the opposite direction of reciprocation, and so on.

In its preferred form, the apparatus may be constituted by a colour printer which is inexpensive and does not require sophisticated machinery for exposure and processing. In such a printer, the speed of printing may be increased since it is unnecessary to scan energy beams onto an imaging sheet which has a layer of micro-capsules containing a dye and a photosensitive composition.

The invention is illustrated, merely by way of exmaple, in the accompanying drawings, in which:-

Figure 1 is a schematic view illustrating a first embodiment of the present invention;

Figure 2A is a drawing of the waveforms of colour resolving signals, Figure 2B is a top view of a picture area formed on a light-sensitive plate, and Figure 2C is a sectional view of the latter;

Figure 3 is a schematic view illustrating a second embodiment of the present invention;

Figure 4 is a schematic view illustrating a third embodiment of the present invention;

Figure 5 is a sectional view of an imaging sheet used in the embodiment of Figure 4;

Figure 6 is a sectional view of an imaging sheet which may be used in the present invention;

Figure 7 is a sectional view of an image-receiving sheet which may be used in the present invention; and

Figure 8 is a graph illustrating the wavelengths of the light employed in the present invention.

First, the principle of the present invention will be explained.

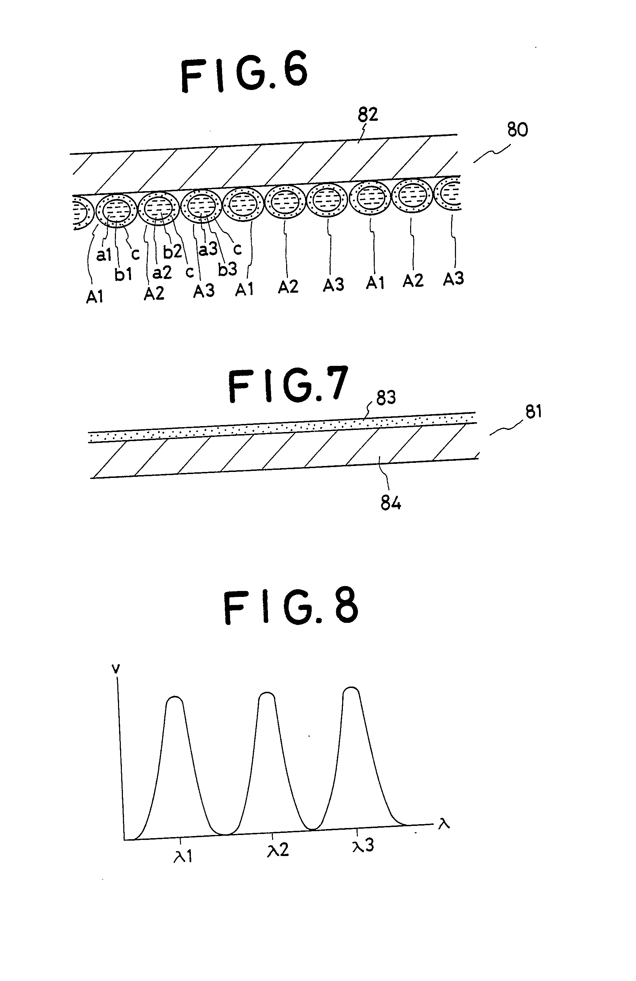

Figure 6 shows a simplified structure of an imaging sheet which may be used in the present invention. Reference symbols A1, A2, A3 denote rupturable dye-containing micro-capsules of the colours cyan, magenta and yellow, respectively. These micro-capsules respectively comprise materials $a_1$, $a_2$, $a_3$ which generate the colours cyan, magenta and yellow, respectively, and reactive compositions $b_1$, $b_2$, $b_3$ which immobilize the dye materials by changing their viscosity etc. as a result of reaction to electromagnetic beams (e.g. light beams) whose wave-lengths $\lambda_1$, $\lambda_2$, $\lambda_3$ (Figure 8) respectively correspond to the colours of the dye materials. The dye materials $a_1$, $a_2$, $a_3$ and the reactive compositions $b_1$, $b_2$, $b_3$ are micro-encapsulated by surrounding thin films C made of gelatin etc. The micro-capsules are coated evenly on the surface of a sheet 82 forming a carrier so as to constitute an imaging sheet 80.

Figure 7 denotes an image-receiving sheet 81 to be used with the imaging sheet 80. The image-receiving sheet 81 is constituted by coating a developing material 83, which generates colours in response to the dye materials $a_1$, $a_2$, $a_3$, on the surface of a sheet 84 forming a carrier.

When the imaging sheet 80 is exposed to light having the wavelengths to which the reactive compositions $b_1$, $b_2$, $b_3$ within the micro-capsules A1, A2, A3 react, the viscosity of the reactive compositions $b_1$, $b_2$, $b_3$ changes. Then, the imaging sheet 80 which has been so exposed, is united with the image-receiving sheet 81 into one body and pressure is added to the united body so that the capsules A1, A2, A3 are broken. As a result, there will be a difference in the amount of the dye materials which flow out of the capsules which have been exposed to the said light and those which have not been so exposed. Consequently, colours corresponding to the wavelengths $\lambda_1$, $\lambda_2$, $\lambda_3$ of the projected light are produced on the image receiving sheet 81. That is, colour patterns can be produced on the image-receiving sheet 81 in accordance with the patterns presented at the time of the light projection.

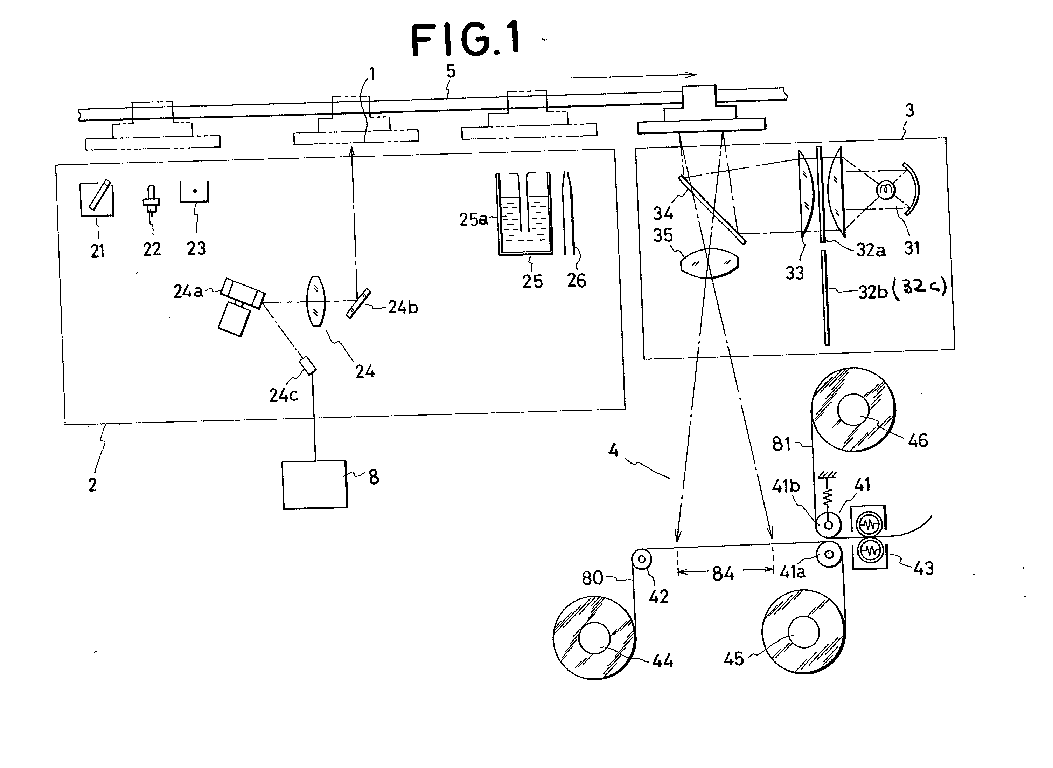

Figure 1 shows one embodiment of the present invention. The system shown in Figure 1 can be divided into four main parts, namely a light-sensitive plate 1, a monochrome picture recording station 2, a projection station 3, and a printing station 4.

The light-sensitive plate 1, as shown in Figure 2C, is formed of a light-sensitive layer 12 which is made of a material whose electrical resistance changes when light is projected onto it, the light-sensitive layer 12 being disposed on the surface of a substrate 11. The plate 1 is arranged to reciprocate along a guide member 5 between the monochrome picture recording station 2 and the projection station 3.

The monochrome picture recording station 2 comprises a cleaning station 21, an electrical charge removing lamp 22, an electrical charging device 23, a light-projection unit 24, which is described below, a developer 25 and an air-jet nozzle 26 all of which face a picture recording side of the light-sensitive plate 1 and are successively arranged in the direction of the forward movement of the light-sensitive plate 1.

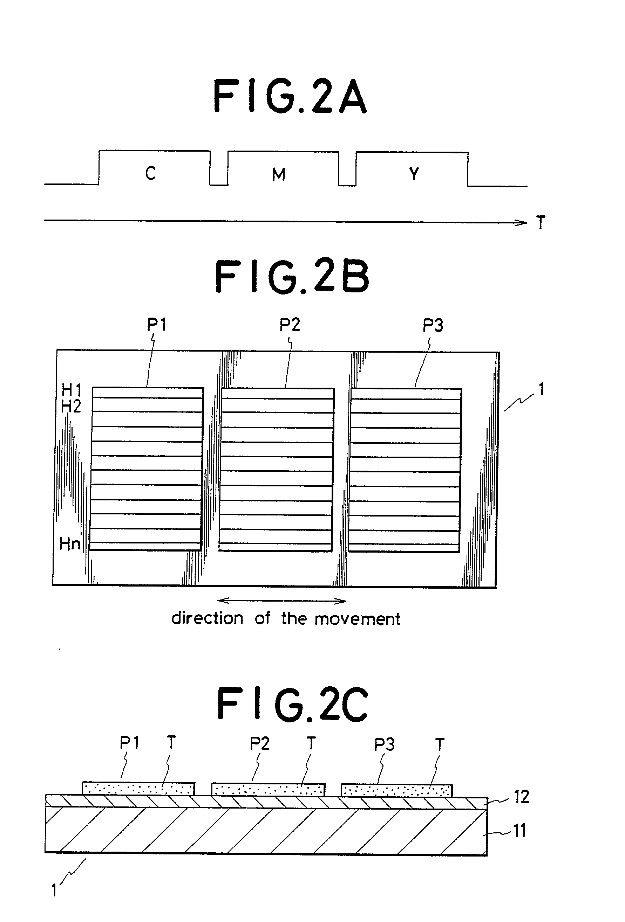

The light projection unit 24 consists of a sub-scanner 24a for scanning light beams in the direction of movement of the light-sensitive plate 1; a main scanner 24b for scanning light beams in the direction of the width of the light-sensitive plate 1; and a light modulator 24c for changing the intensity of the output light in response to colour resolving signals (Figure 2A) from a host device 8. The host device 8 may, for example, produce such signals as a result of scanning a multi-coloured original picture. The signals from the host device 8 cause the light-sensitive plate 1 to be provided with a pattern of areas of low and high resistance such that, when the light-sensitive plate 1 is charged and toner T (Figure 2C) is applied thereto (by means described below), the toner T will adhere to the low resistance areas only of the light-sensitive plate 1, whereby to make such areas reflective.

The projection station 3 will now be described in detail.

Reference symbol 31 denotes a light source which generate light including the wavelengths $\lambda_1$, $\lambda_2$, $\lambda_3$ to which the respective micro-capsules A1, A2, A3 of the imaging sheet 80 react. The light from the light source 31 is focused by a condenser lens 33 through a filter 32a , 32b or 32c which selectively transmits only the light having the wavelength to which the respective micro-capsules react, and then the light is projected onto a half mirror or half-silvered mirror, 34. The half mirror 34 reflects the light from the condenser lens 33 toward the light-sensitive plate 1, while it also directs the light reflected from the light-sensitive plate 1 onto a projection lens 35.

The following is a detailed description of the printing station 4.

The imaging sheet 80 is arranged to travel over a guide roller 42 and over one of the rollers 41a of a developer 41, the developer 41 also comprising a roller 41b so that the imaging sheet 80 passes between the rollers 41a, 41b. The imaging sheet 80 is arranged to extend with its micro-capsule side facing the projection lens 35 so that a light-receiving station 84 is formed on the imaging sheet 80. The image-receiving sheet 81 is arranged to travel over the roller 41b and between the rollers 41a and 41 b with its side having the developing material 83 facing the micro-capsules. In order to raise the temperature of the image-receiving sheet 81, a heat roller 43 is provided at the lower side of the sheet run and thus on the side opposite to that contacted by the roller 41b of the developer 41. Reference numerals 44 and 45 denote an imaging sheet supplying reel and a roll-in reel, respectively. Reference numeral 46 denotes an image-receiving sheet supplying reel.

In the above embodiment, the light-sensitive plate 1 is first returned to an home position adjacent the monochrome picture recording station 2, and then it is moved toward the projection station 3. During the movement, the light-sensitive plate 1 is rid of any toner and any remaining electric charges which are on the surface of the plate by means of the cleaning station 21 and the electrical charge removing lamp 22. Subsequently, the light-sensitive plate 1 is evenly charged by the charging device 23. At this stage, picture signals are outputted from the host device 8, so that the light modulator 24c is operated by the colour resolving signals C of cyan, M of magenta, and Y of yellow, and the scanning devices 24a, 24b are operated by scanning signals. Consequently, the light-sensitive plate 1 receives light beams corresponding to the colour resolving signals in the direction of the movement of the light-sensitive plate 1 and forms a latent image of a first line H1 (Figure 2B) according to each primary colour along the direction of the movement. When the scanning of the first line is completed, the angular position of the main scanner 24b is displaced through a number of degrees corresponding to the width of one line in order to shift the scanning course of the sub-scanner 24a. Then, the sub-scanner 24a scans the light from the light modulator 24 c on the surface of the light-sensitive plate 1 along a second line H2 in the direction of the movement of the light-sensitive plate 1.

Repeating the above steps, the latent images of the primary colours corresponding to the picture signals are formed on the light-sensitive plate 1. When the latent images are completely formed, the light-sensitive plate 1 is transferred along the guide member 5 to the developer 25 and is exposed to a developing solution 25a therein. As a result, the toner particles T (Figure 2C) in the developing solution 25a are adsorbed in accordance with the latent images so as to form revealed images. Thus, on the surface of the light-sensitive plate 1, as shown in Figure 2B and Figure 2C, a first monochrome picture P1, a second monochrome picture P2, and a third monochrome picture P3, corresponding to the colour resolving signals C, M, Y, are so formed that they are spaced along the direction of the movement of the light-sensitive plate 1.

The light-sensitive plate 1, after being acted on by the developer 25, moves to the projection station 3 while any diffusing medium from the developing solution 25a which remains on the surface of the plate 1 is evaporated by a jet of air from the air jet nozzle 26. Then, the light-sensitive plate 1 is brought to a position in which the first monochrome picture P1 is aligned with the light-receiving station 84. Light is then projected from the light source 31 through the filter 32a which corresponds to the primary colours of the picture P1. Consequently, the picture P1 receives spectral light having the wavelength $\lambda_1$ and reflects it at an intensity according to the required shade of the picture so as to direct it onto the half mirror 34. The spectral light, after passing through the half mirror 34 and the projection lens 35, focuses an image on the surface of the capsules on the imaging sheet 80. This has the effect of hardening only the micro-capsules A1 out of the micro-capsules A1, A2, A3 on the surface of the imaging sheet 80, the micro-capsules A1 being of cyan colour and reacting to the light of the wavelength $\lambda_1$.

When the projection of the first picture P1 has been completed, the light-sensitive plate 1 is moved so that the second picture P2 can be transferred to the light-receiving station 84. The position of the plate 1 is arranged so that the picture P2 overlaps the picture P1 previously projected. At this stage, the filter 32a is replaced by the filter 32b, and spectral light is projected having the wavelength $\lambda_2$ to which the magenta micro-capsules A2 are responsive, whereby to produce the second picture P2. The second picture P2 is projected onto the imaging sheet 80 so that the picture P2 overlaps the latent image of the picture P1 previously projected. Thus, only the magenta capsules A2 which form the second picture P2 are selectively reacted.

After the projection of the second picture P2, the light-sensitive plate 1 is moved so that the third picture P3 is projected onto the imaging sheet 80 by the spectral light $\lambda_3$, the filter 32b being replaced by the filter 32c. Consequently, the yellow capsules A3 are reacted. Needless to say, the optical density of each picture P1, P2, P3 formed on the light-sensitive plate 1 corresponds to the intensity of the respective colour resolving signals. Therefore, the amount of the light reflected from the picture corresponds to the intensity of the respective colour resolving signals.

When the latent images of all the pictures P1,P2, P3 have been completely formed on the imaging sheet 80, the imaging sheet 80 and the image-receiving sheet 81 are pressed together between the rollers 41a and 41b of the developed 41 so that the two sheets are united.

When the sheets 80, 81 are pressed together, since the light-reactive compositions $b_1$, $b_1$, $b_3$ enclosed in the micro-capsules A1, A2, A3 are hardened in accordance with the amount of the light projected, the quantities of the dye materials $a_1$, $a_2$, $a_3$ which flow out of the capsules A1, A2, A3 vary according to the amount of the light projected. Therefore, quantities of the dye materials $a_1$, $a_2$, $a_3$ which correspond to the amounts of the light projected flow onto the image-receiving sheet 81 from the portion of the imaging sheet 80 which has been pressed by the developer 41.

After passing through the developer 41, the imaging sheet 80 is reeled around the winding reel 45, while the image-receiving sheet 81 is heated by the heat roller 43 so as to accelerate the reaction between the dye materials $a_1$, $a_2$, $a_3$ exuded from the imaging sheet 80 and the developing material 83. As a result, colours corresponding to the picture signals are provided. That is, colour patterns corresponding to the picture signals inputted are obtained. Since many micro-capsules A1, A2, A3 having the three primary colours are coated on the surface of the carrier 82 of the imaging sheet 80, the colour pictures are constituted by an accumulation of tiny dots of the three primary colours, in which each primary colour is merged with the others.

After one picture has been printed as above, another picture can be printed by transferring the light-sensitive plate 1 to the monochrome picture recording station 2 and repeating the above steps.

If a plurality of copies are required to be made per picture, the three pictures P1, P2, P3 formed on the light-sensitive plate 1 are projected in turn by means of the spectral light $\lambda_1$, $\lambda_2$, $\lambda_3$ so as to form latent images on the imaging sheet 80. Next, developing is effected by means of the image-receiving sheet 81. Thus a repetition of the process of making monochrome pictures is omitted. Therefore, the speed of printing can be increased.

In the embodiment described above, three monochrome pictures corresponding to the three primary colours are formed on the light-sensitive plate 1 at the same time. The same effect can be obviously obtained by projecting a picture onto a picture sheet every time a monochrome picture of a primary colour is formed.

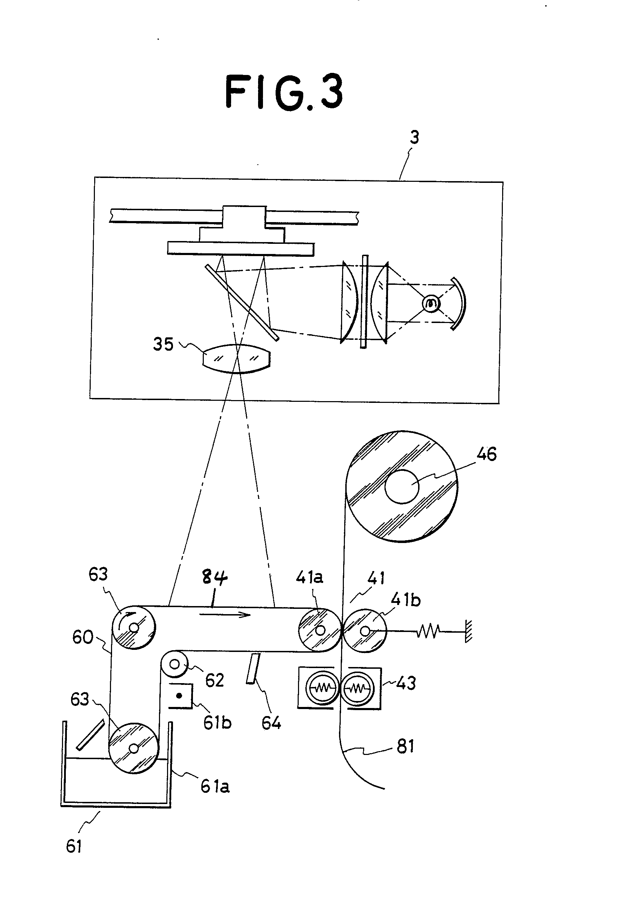

Figure 3 shows a second embodiment of the present invention which is generally similar to that of Figure 1 and which for this reason will not be described in detail, like reference numerals indicating like parts.

In Figure 3 reference numeral 60 denotes a capsule-carrying endless belt made of an electrically insulating sheet material. The belt 60 is entrained around a guide roller 62 and driving rollers 63, 63 so that it runs between a micro-capsule supplying device 61, which is further described below, and a developer 41. The side of the belt 60 where the micro-capsules are attached faces the projection lens 35. The micro-capsule supplying device 61 has a medium containing micro-capsules A1, A2, A3, in which are enclosed dye materials $a_1$, $a_2$, $a_3$ corresponding to primary colours, and reactive compositions $b_1$, $b_2$, $b_3$, the medium being contained in a vessel 61a. In addition, adjacent the outer side of the belt 60, there is provided an electrical charging device 61b. Reference numeral 64 denotes a cleaning unit for removing the cases of the micro-capsules broken by the pressure employed during development.

In the second embodiment, the changing device 61b is operated, with the rollers of the developer 41 being widely spaced apart so that the drive roller 63 drives the belt 60. As a result, the belt 60 is charged at a constant potential by receiving electrical charges from the charging device 61b while passing through the said medium. At this stage, the micro-capsules in the said medium are attracted by the potential of the belt 60 and are adsorbed uniformly on the surface of the belt 60.

When the portion of the belt 60 where the micro-capsules are adsorbed reaches the light-receiving area 84, the movement of the belt 60 is stopped. Then, the pictures P1,P2, P3 on the light-sensitive plate 1 are projected onto the belt 60 with their positions overlapped so as to form latent images on the micro-capsules on the surface of the belt 60.

When the formation of the said latent images is completed, the rollers 41a , 41b of the developer 41, which were previously apart, are returned to the predetermined positions from which the belt 60 and the image-receiving sheet 81 can be pressed together. At the same time, the developer 41 is operated, with the image-receiving sheet 81 facing the side of the belt 60 where the micro-capsules are attached. Consequently, the respective micro-capsules on the surface of the belt 60 are broken by the pressure according to the latent images, so that the image-receiving sheet 81 is coloured to form the required image thereon. The belt 60, after passing through the developer 41, is subjected to the removal of the remaining capsules by the cleaning unit 64. Then, passing the charging device 61b, the belt 60 is provided with new micro-capsules in the vessel 61a and is thus prepared for the next printing.

The above embodiment permits the capsule carrying belt 60 to be re-used so that the running costs can be decreased.

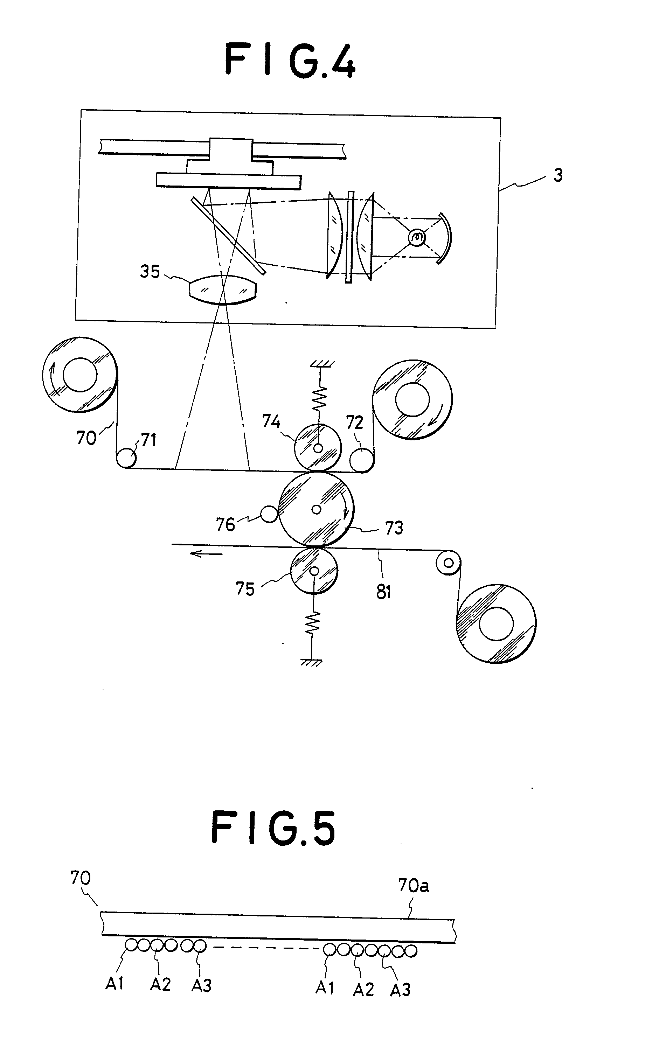

Figure 4 shows a third embodiment of the present invention which is generally similar to that of Figure 1 and which for this reason will not be described in detail, like reference numerals indicating like parts.

In Figure 4 numeral 70 denotes an imaging sheet. As shown in Figure 5, the imaging sheet 70 comprises a macro-molecular film 70 a having light-transmitting quality, such as polyethylene, which is used as a carrier sheet On the surface of the film 70a, micro-capsules A1, A2, A3, enclosing dye materials, are coated evenly so as to constitute the imaging sheet. The imaging sheet 70 is entrained over guide rollers 71 and 72 with the side of the carrier 70a remote from the micro-capsules A1, A2, A3, facing the projection lens 35. Numeral 73 denotes a copying roller, which is located on the side of the imaging sheet 70 where the micro-capsules are coated. The copying roller 73 is subjected to pressure from a pressure roller 74 located on the opposite side of the imaging sheet 70. The copying roller 73 also receives pressure from a developing roller 75 on the lower side of the roller 73 so as to press the image-receiving sheet 81 which passes between the rollers 73, 75. Numeral 76 denotes a cleaning unit for removing stains from the surface of the copying roller 73.

In the third embodiment, the pictures P1, P2, P3 of the light-sensitive plate 1 are projected onto the opposite side of the imaging sheet 70 by means of the light of the wavelengths $\lambda_1$, $\lambda_2$, $\lambda_3$ respectively. The images projected are transmitted through the carrier 70a and they act on the micro-capsules A1, A2, A3. As a result, latent images corresponding to the pictures of the primary colours are formed. When the formation of the latent images is over, the copying roller 73 is rotated. Consequently, the imaging sheet 70 is driven and is subjected to pressure from the copying roller 73 and the pressure roller 74.

At this stage, pressure is applied to the micro-capsules A1, A2, A3 on the surface of the imaging sheet 70 by the pressure roller 74 through the carrier 70a constituted by the macro-molecular film. As a result, the capsules are broken so as to discharge the dye materials of the latent images.

Since the carrier 70a is made of a non-porous film, the micro-capsules cannot merely be forced into the carrier 70a. Therefore, they are broken without fail.

The dye materials discharged from the capsules in the above manner are attached to the surface of the copying roller 73 and conveyed toward the image-receiving sheet 81. They are transferred to the surface of the image-receiving sheet 81 which is pressed by the developing roller 75 so that the required picture appears on the image-receiving sheet 81. The portion of the copying roller 73 which has been so used to transfer the image is then rid of the remaining materials by the cleaning roller 76 and is then returned toward the pressure roller 74.

In the said third embodiment, pressure is applied to the micro-capsules through the carrier sheet 70a. Therefore, the depth to which the micro-capsules can be forced into the carrier sheet 70a is decreased. Accordingly, the pressure required to break the capsules can be reduced as much as possible, so that the construction of the developer can be simplified. In addition, the amount of capsule materials attached to the image-receiving sheet 81 is substantially reduced, so that the quality of the printed pictures can be improved.

Although a non-porous film is used for the carrier sheet 70a in the said third embodiment, it is obviously possible to decrease the number of capsules forced into the carrier sheet 70a and to lower the pressure to be applied at the time of development as much as possible by employing instead an ordinary paper which is a fibrous polymer for the carrier portion of the imaging sheet.

In the embodiments described above, colour resolving signals are converted to monochrome pictures by an electrostatic photographic method and then the imaging sheet is irradiated by the use of reflectance. Alternatively, however, a light-transmitting method can be used by employing as the imaging sheet an electrostatic light-sensitive material made of a transparent substrate.

Furthermore, a recording medium which can be used for the formation thereon of the monochrome pictures is not restricted to an electrostatic light sensitive material. A liquid crystal panel or the like onto which an energy beam can write makes it possible to attain the same effect.

The micro-capsules on the imaging sheet are broken by the pressure between rollers in the embodiments described above. However, the micro-capsules can alternatively be broken by elastic oscillation by providing a vibrating block, to which an ultrasound vibrator is attached, so as to press the imaging sheet. The same result can also be obtained by directing microwave or heat ray energy onto the micro-capsules so as to cause thermal breakdown.

Furthermore, the micro-capsules and the developing material are coated on different carriers in the embodiments described above. It is obvious, however, that the same effect can be brought about by employing an imaging sheet on which the developing material has previously been coated. That is, one sheet on which both the micro-capsules and the developing material are coated can be used so as to obtain the same result.

In the embodiments described above monochrome pictures coresponding to respective colour resolving signals are obtained and every such monochrome picture is projected onto an imaging sheet by means of light whose wavelengths are different from one another.

Accordingly, in the embodiments described above the following effects are brought about:-

(1) The scanning area at the time of converting the colour resolving signals into pictures is reduced as much as possible, so that the time required for writing can be lessened.

(2) The picture information can be written onto an imaging sheet by projecting patterns. Therefore, the registration of each of the primary colours with one another can be simplified and the print size can be changed more easily. In addition, the process of converting colour resolving signals into pictures can be omitted at the time of printing a plurality of copies for one picture, so that the speed of colour printing can be increased.

**Claims**

1. A method of forming a multi-colour image comprising forming a layer of rupturable capsules (A1, A2, A3), the said capsules containing material ($a_1$, $a_2$, $a_3$, $b_1$, $b_2$, $b_3$) at least part ($a_1$, $a_2$, $a_3$) of which is adapted to form an image and at least part ($b_1$, $b_2$, $b_3$) of which is such that the ability to form the said image is altered upon exposure to light; exposing said capsules (A1, A2, A3) to a predetermined light pattern; and rupturing said capsules (A1, A2, A3) so as to produce an image characterised in that the capsules (A1,A2,A3) contain materials ($a_1$, $a_2$, $a_3$, $b_1$, $b_2$, $b_3$) of different colours (C,M,Y) whose abilities to form images are respectively altered on exposure to light of different wavelengths($\lambda_1$, $\lambda_2$, $\lambda_3$), the exposure of the capsules to the predetermined light pattern comprising exposing them to light of the said wavelengths ($\lambda_1$, $\lambda_2$, $\lambda_3$).

2. A method as med in claim 1 characterised in that each said capsule (A1, A2, A3) contains a dye ($a_1$, $a_2$, $a_3$) and a composition ($b_1$, $b_2$, $b_3$) for immobilizing the dye.

3. A method as claimed in claim 2 characterised in that the capsules (A1, A2, A3) respectively contain dyes ( $a_1$, $a_2$, $a_3$) of three primary colours, each capsule containing a dye of one primary colour only.

4. A method as claimed in any preceding claim characterised in that a plurality of monochrome pictures (P1, P2, P3) are formed which correspond respectively to monochrome components of the required multi-colour image, and light of the respective one of said wavelengths ($\lambda_1$, $\lambda_2$, $\lambda_3$) is

directed onto each monochrome picture (P1, P2, P3) so as to be reflected thereby onto the capsules (A1, A2, A3).

5. A method as claimed in claim 4 characterised in that a light-sensitive plate (1), whose electrical resistance changes when subjected to light, is electrically charged, is scanned by a light beam to produce a pattern of areas of low and high resistance and has toner applied thereto so as to produce the said monochrome pictures (P1, P2, P3).

6. A method as claimed in any preceding claim characterised in that the layer of rupturable capsules (A1, A2, A3) are coated onto an imaging member (80), the rupture of the capsules causing the image to be transferred to an image-receiving member (81).

7. A method as claimed in claim 6 characterised in that the image is transferred by positioning the imaging member (80) and the image-receiving member (81) adjacent to each other, and effecting the said rupture by subjecting the capsules to pressure.

8. A method as claimed in claim 6 or 7 characterised in that the image-receiving member (81) is coated with a developing material (83) which generates colours in response to the said material ($\underline{a}_1$, $\underline{a}_2$, $\underline{a}_3$).

9. A method as claimed in any of claims 6-8 characterised in that the imaging member comprises an endless belt.

10. A method as claimed in claim 9 characterised in that the endless belt extends through a vessel (61$\underline{a}$) containing a liquid medium in which the said capsules (A1, A2, A3) are dispersed.

11. A method as claimed in any of claims 6-10 characterised in that the imaging member (70) and the image-receiving member (81) contact diametrically opposite points on a copying roller (73) which transfers material from the ruptured capsules on the imaging member (70) to the image-receiving member (81).

12. Apparatus for forming a multi-colour image comprising exposure means (3) for exposing to a predetermined light pattern a layer of rupturable capsules (A1, A2, A3) which contain material ($\underline{a}_1$, $\underline{a}_2$, $\underline{a}_3$, $\underline{b}_1$, $\underline{b}_2$, $\underline{b}_3$) at least part ($\underline{a}_1$, $\underline{a}_2$, $\underline{a}_3$) of which is adapted to form an image and at least part ($\underline{b}_1$, $\underline{b}_2$, $\underline{b}_3$) of which is such that the ability to form the said image is altered by exposure to light, and means (41) for rupturing said capsules (A1, A2, A3) so as to produce an image characterised in that the exposure means (3) comprise means (32$\underline{a}$, 32$\underline{b}$, 32$\underline{c}$) for exposing the capsules (A1, A2, A3) to light of different wavelengths ($\lambda_1$, $\lambda_2$, $\lambda_3$) such that the image-producing properties of capsules (A1, A2, A3) containing materials ($\underline{a}_1$, $\underline{a}_2$, $\underline{a}_3$) of different colours (C,M,Y) are respectively altered thereby.

13. Apparatus as claimed in claim 12 characterised in that there are monochrome picture producing means (1,2) for producing a plurality of monochrome pictures (P1, P2, P3) which correspond respectively to monochrome components of the required multi-colour image, the exposure means (3) comprising means (33,34,35) for directing light of the respective one of said wavelengths ($\lambda_1$, $\lambda_2$, $\lambda_3$) onto each monochrome picture (P1, P2 P3) so as to be reflected thereby onto the capsules (A1, A2, A3).

14. Apparatus as claimed in claim 13 characterised in that the monochrome picture producing means comprises a light-sensitive plate (1) whose electrical resistance changes when subjected to light; means (23) for electrically charging the light-sensitive plate (1); scanning means (24$\underline{a}$, 24$\underline{b}$) for scanning a light beam over the light-sensitive plate (1) to form thereon a pattern of areas of low and high resistance; and means (25) for applying toner (T) to the so charged and scanned light-sensitive plate (1).

15. Apparatus for forming an image on an image-receiving sheet, comprising: an imaging sheet coated with rupturable dye-containing capsules; means for making a plurality of monochrome pictures on a light-sensitive plate, corresponding to the pictures separated into three primary colours: means for projecting said monochrome pictures onto a light-receiving station by light whose wavelengths are different from one another; means for moving said imaging sheet past said light-receiving station; and means for pressing said imaging sheet and said image-receiving sheet with said capsules coating face of said imaging sheet facing said image-receiving sheet, so that the layer of capsules lies sandwiched between said sheets.

16. Apparatus for forming an image on an image-receiving sheet, comprising: an imaging sheet which is connected one-end of it with the other-end of it, so that the imaging sheet forms a ring; a capsule supplying device having dye-containing capsules, which are diffused into a liquid medium, and supplying said dye-containing capsules to a surface of said imaging sheet; means for making a plurality of monochrome pictures on a light-sensitive plate, corresponding to the pictures separated into three primary colours; means for projecting said monochrome pictures onto a light-receiving station by light whose wavelengths are different from one another; means for moving said imaging sheet past said capsule supplying device and light-receiving station consecutively; and means for pressing said imaging sheet and said image-receiving sheet with said capsules coating face of said imaging sheet facing said image-receiving sheet, so that the layer of capsules lies sandwiched between said sheets.

FIG.1

# FIG.2A

C     M     Y

T

# FIG.2B

P1     P2     P3

H1
H2

Hn

1

direction of the movement

# FIG.2C

P1  T     P2  T     P3  T

12

11

1

0 249 429

# FIG.3

# F I G.4

# F I G.5

# FIG.6

# FIG.7

# FIG.8